# EUROPÄISCHE PATENTSCHRIFT

(11) **EP 0 567 002 B1**
(45) Veröffentlichungstag und Bekanntmachung des Hinweises auf die Patenterteilung: **21.06.1995**
(21) Anmeldenummer: 93106191.5
(22) Anmeldetag: 16.04.1993
(51) Int. Cl.: E05C 17/04, E05D 7/06, F16C 11/04, F16C 11/06

(54) **Kraftwagentürfeststeller mit einer Haltestangenlagerung**
Motor Vehicle Door Check having a Bearing for the Arm thereof
Arrêt de Porte de Véhicule automobile ayant un Pivot pour le Bras de celui-ci

(30) Priorität: 23.04.1992 DE 4213298
(43) Veröffentlichungstag der Anmeldung: 27.10.1993
(73) Patentinhaber: ED. Scharwächter GmbH & Co.KG., D-42855 Remscheid (DE)
(72) Erfinder: Klüting, Bernd-Alfred, W-5608 Radevormwald (DE)
(74) Vertreter: Schön, Theodor, Patent- und Zivilingenieur

(56) Entgegenhaltungen:
- EP-A- 0 299 147
- EP-A- 0 377 081
- FR-A- 1 493 667
- GB-A- 2 058 239
- US-A- 4 786 202
- US-A- 5 080 520

## Beschreibung

Die Erfindung bezieht sich auf einen Kraftwagentürfeststeller mit einer Haltestangenlagerung, die aus einer am einen Türanordnungsteil, Tür oder Türsäule angelenkten Türhaltestange und einem am anderen Türanordnungsteil befestigten Haltergehäuse bestehen und bei denen die mit einer Scharnieraugenbohrung versehene Türhaltestange auf einem vermittels eines Lagerbockes feststehend an einem der beiden Türanordnungsteile, Tür oder Türsäule, befestigten Lagerstift schwenkbar gelagert ist.

Die bekannten Lagerungen für Türhaltestangen von Türfeststellern für Kraftwagentüren haben einen hohen Entwicklungsstand erreicht und zeichnen sich daher zum einen durch ein hohes Maß an Laufruhe, zum anderen aber auch durch eine starre, zur Scharnierachse der Türanlenkung parallel ausgerichtete Lagerachse für die Türhaltestange aus. Die Bestrebungen zur Verbesserung der Laufruhe, d.h. zur Vermeidung von Knackgeräuschen, in der Schwenklagerung der Türhaltestange waren bisher im wesentlichen darauf gerichtet, die Schwenklagerung der Türhaltestange möglichst unempfindlich gegen die aus dem Betrieb des Türfeststellers resultierenden Beanspruchungen zu gestalten. Insbesondere wurde versucht die in der Lagerung der Türhaltestange von Kraftfahrzeugtürfeststellern auftretenden, sehr hohen radial wirkenden und unangenehmerweise stoßartig auftretenden Kraftspitzen, die daraus resultieren, daß bei den gebräuchlichen Türfeststellern die für das Abbremsen und Festhalten der Tür in bestimmten vorgesehenen Öffnungslagen erforderlichen hohen Brems- und Haltekräfte in der Weise aufgebracht werden, daß eine mit Rastmarken versehene Türhaltestange durch ein mit federbelasteten Brems-und Haltekörpern versehenes Halterhäuse hindurchbewegt wird, mittels einer elastischen Verformung oder einer axialen Nachstellung in der Haltestangenlagerung aufzunehmen oder zu neutralisieren. Im Wesentlichen unberücksichtigt ist bei den bekannten Gestaltungsformen der Schwenklagerung der Türhaltestange jeweils die Tatsache geblieben, daß sich bei manchen Fahrzeugtypen bzw. Fertigungsverfahren für Karosserie und Türkörper infolge des Lösens von Spannungen innerhalb des Karosserie- und/oder Türkörpers eine Winkellage der Türhaltestange zur Durchgangsöffnung des Haltergehäuses bzw. zu den im Haltergehäuse angeordneten federbelasteten Brems-oder Haltekörpern ergeben kann, mit der Folge, dar in ungünstigen Fällen beim Betrieb des Türfeststellers vor allem eine aus einem Flachmaterialzuschnitt gebildete Türhaltestange entweder an den Rändern der Durchgangsöffnung des Haltergehäuses schleift oder wenigstens nur über ihre Kanten mit den Brem-oder Haltekörpern des Haltergehäuses zusammenwirkt.

Unabhängig davon, welche der vorgenannten Möglichkeiten eines unsymetrischen Zusammenwirkens der Türhaltestange mit der Halteeinrichtung infolge der Winkelstellung der Türhaltestange oder wenigstens der Brems-und Rastmarken der Türhaltestange zur Halteeinrichtung bzw. zu deren Teilen auftritt, entstehen neben einem beträchtlichen vorzeitigen Verschleiß immer auch Geräusche beim Durchgang der Türhaltestange durch das Haltergehäuse, die sich infolge des Umstandes, daß die aneinandergrenzenden Karosserieteile, Tür und Türsäule jeweils Hohlkörper sind, die als Resonanzkörper wirkend auch die geringste Geräuschentwicklung im Türfeststeller vielfach verstärken, sowohl beim Öffnen als auch beim Schließen der Fahrzeugtür außerordentlich unangenehm bemerkbar werden.

Der Erfindung liegt daher die Aufgabe zugrunde einen Kraftwagentürfeststeller mit einer Haltestangenlagerung zu schaffen, die einerseits mit einem geringstmöglichen Aufwand herstellbar und montierbar ist und die andererseits ohne Verringerung der Festigkeit der Lagerung zum einen eine dauerhaft leichtgängig ist und die es zum anderen der Türhaltestange erlaubt sich unabhängig von einem evtl. eintretenden Lagenversatz von Schwenklagerung und Haltergehäuse eine zur Druchgangsöffnung des Haltergehäuses bzw. zu den Brems-und Haltegliedern parallel und höhengleich ausgerichtete Lage beizubehalten.

Diese Aufgabe wird bei einem Kraftwagentürfeststeller mit einer Haltestangenlagerung der eingangs genannten Bauart erfindungsgemäß im wesentlichen dadurch gelöst, daß die Türhaltestange vermittels eines sphärisch ausgebildeten Lagers räumlich schwenkbar am Lagerstift gelagert ist, wobei der Lagerkern des sphärischen Lagers durch einen an dem Lagerstift angeordneten Kugelabschnitt gebildet ist. Eine solche Ausbildung der Schwenklagerung der Türhaltestange ermöglicht zum einen eine ausreichend feste Gestaltung der Lagerung an sich und zum anderen der Türhaltestange ein selbsttäiges exaktes Ausrichten ihrer Lage zur Durchgangsöffnung des Haltergehäuses bzw. zu den in diesem angeordneten Brems-bzw. Haltekörpern ohne Beeinträchtigung der Spielfreiheit ihrer Lagerung, so daß Schiefstellungen einer insbesondere durch einen Flachmaterialzuschnitt gebildeten Türhaltestange zur Durchgangsöffnung des Haltergehäuses bzw. zu den in diesem angeordneten Brems-oder Haltekörpern ausgeschlossen sind. Dies gilt insbesondere auch bei von vornherein toleranzbehafteter Montage einerseits des Lagerbockes am einen und andererseits des Haltergehäuses am anderen Türanordnungsteil. Besonders vorteilhaft ist es dabei, daß sich aus der sphärischen Wölbung der Lagerung eine Vergrößerung der Lagerfläche und damit automatisch auch eine sichere Abstützung selbst großer Kraftspitzen ergibt.

Im Einzelnen kann der den Lagerkern bildende Kugelabschnitt durch eine entsprechende Formgebung des freien Endes eines fliegend am Lagerbock befestigten Lagerstiftes oder aber durch eine mittig angeordnete Ausbauchung eines in einem zweiarmigen Lagerbock aufgenommenen Lagerstiftes gebildet sein.

In manchen Fällen kann es sich aber auch anbieten den Lagerkern des sphärischen Lagers als besonderes vorgefertigtes Bauteil auf den Lagerstift aufzubringen und an diesem in der gewünschten Lage, beispielsweise mittels Pressitz festzulegen.

Um innerhalb der Schwenklagerung nicht nur Schiefstellungen der Türhaltestange zum Querschnitt der Durchgangsöffnung des Haltergehäuses, sondern zusätzlich auch Höhenunterschiede in der Lage einerseits des Lagerbockes und andererseits des Haltergehäuses innerhalb eines weiten Umfanges selbsttätig ausgleichen zu können ist bei einer ersten Verwirklichungsform der Erfindung weiter vorgesehen, daß bei einer durch eine einteilige Ausformung oder eine feste Verbindung des den Lagerkern bildenden Kugelabschnittes mit dem Lagerstift gekennzeichneten Lagerausbildung der Lagerzapfen zwar vorzugsweise drehsicher, jedoch axial verschieblich im zugehörigen Lagerbock aufgenommen ist.

Um innerhalb der Schwenklagerung nicht nur Schiefstellungen der Türhaltestange zum Querschnitt der Durchgangsöffnung des Haltergehäuses, sondern zusätzlich auch Höhenunterschiede in der Lage einerseits des Lagerbockes und andererseits des Haltergehäuses innerhalb eines weiten Umfanges selbsttätig ausgleichen zu können kann nach einer weiteren Verwirklichungsform der Erfindung jedoch auch vorgesehen sein, daß der Lagerkern des sphärischen Lagers axial verschieblich auf dem Lagersift gelagert ist, wobei zur Erhöhung der Leichtgängigkeit der Verschieblichkeit der den Lagerkern bildende Kugelabschnitt vermittels einer Lagerbuchse aus wartungsfreiem Material auf dem im Übrigen zylindrisch ausgebildeten Lagerstift gelagert ist.

Vor allen zur Anwendung bei aus einteiligen oder mehrteiligen Flachmaterialzuschnitten gebildeten Türhaltestangen ist erfindungsgemäß weiter vorgesehen, daß das sphärische Lager insgesamt scheibenförmig ausgebildet ist, wobei die Höhe des sphärischen Lagers wenigstens annähernd der Materialdicke der Türhaltestange entspricht und der Lagerring des sphärischen Lagers vermittels Pressitz in einer gegebenenfalls auch unrunden Augenbohrung der Türhaltestange befestigt ist.

Hinsichtlich der Festlegung des Lagerringes in der Augenbohrung der Türhaltestange kann zusätzlich noch vorgesehen sein, daß über dessen Außenumfang hin verteilt angeordnete, örtliche Verformungen in das Material der Türhaltestange eingebracht sind, welche mit dem Außenumfang des Lagerringes im formschlüssigen Eingriff stehen.
Ferner kann unabhängig von der sonstigen Ausgestaltung und Anordnung des sphärischen Lagers erfindungsgemäß weiterhin auch noch vorgesehen sein, daß der Lagerkern des sphärischen Lagers eine größere axiale Höhe aufweise als der Lagerring bzw. die Materialstärke der Türhaltestange, wordurch unabhängig von der jeweiligen Gestaltung der Arme des Lagerbockes eine diesen gegenüber stets freigängige Ausrichtung der Türhaltestange gewährleistet ist.

In einer ersten praktischen Verwirklichungsform ist der Lagerbock als zweiarmiger Lagerbock, dessen beide Arme das Lagerende der Türhaltestange gabelartig umgreifen, ausgebildet und der Lagerstift drehsicher an den Armen des Lagerbockes festgelegt, wodurch sich eine naturgemäße Begrenzung der axial gerichteten Verschieblichkeit des Lagerkernes auf dem Lagerstift ergibt.

In einer zweiten praktischen Verwirklichungsform kann aber auch vorgesehen sein, daß der Lagerstift fliegend und drehsicher an einem einarmigen Lagerbock gelagert und an seinem freien Ende mit einem angeformten oder angefügten Kopfteil versehen ist. Dabei kann das die axial Verschieblichkeit des Lagerkernes auf dem Lagerstift begrenzende Kopfteil durch eine auf dessen freies Ende aufgeschraubte Mutter oder aber durch eine nachträgliche Verformung des freien Endes des Lagerstiftes gebildet sein.

Die beiden Teile des sphärischen Lagers bestehen erfindungsgemäß aus einer wartungsfrei zusammenarbeitenden Materialpaarung und können daher auch aus einem geeigneten Kunststoffmaterial bestehen oder wenigstens mit einer Beschichtung aus wartungsfreiem Lagermaterial versehen sein.

Die Erfindung ist in der nachfolgenden Beispielsbeschreibung anhand einiger in der Zeichnung dargestellter Ausführungsbeispiele im Einzelnen beschrieben.
In der Zeichnung zeigt die
- Figur 1: einen Schnitt durch eine erste Ausführungsform einer erfindungsgemäßen Haltestangenlagerung;
- Figur 2: eine Draufsicht zur Figur 1;
- Figur 3: einen Schnitt durch eine zweite Ausführungsform einer erfindungsgemäßen Haltestangenlagerung;
- Figur 4: einen Schnitt durch eine dritte Ausführungsform einer erfindungsgemäßen Haltestangenlagerung;
- Figur 5: einen Schnitt durch eine vierte Ausführungsform einer erfindungsgemäßen Haltestangenlagerung;
- Figur 6: einen Teilschnitt durch eine fünfte Ausführungsform einer erfindungsgemäßen Haltestangenlagerung;
Die Türhaltestange 1 eines in seiner Gesamtheit nicht gezeigten Türfeststellers für Kraftwagentüren ist an ihrem freien Ende vermittels eines Lagerstiftes 2 an einem am einen, gleichfalls nicht im Einzelnen dargestellten Türanordnungsteil befestigten Lagerbock 3 schwenkbar gelagert.

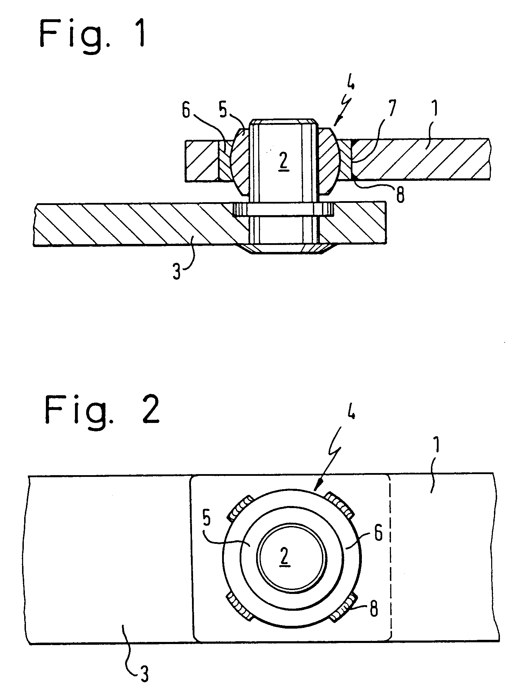

Bei der Ausführungsform nach der Figur 1 ist der Lagerstift 2 zylindrisch ausgebildet und vermittels Vernietung fliegend an einem einarmigen Lagerbock 3 befestigt. Auf dem Lagerstift 2 ist ein den Lagerkern eines sphärischen Lagers 4 bildender, als eigenständiges Bauteil ausgebildeter Kugelabschnitt 5 axial verschieblich angeordnet. Dem durch den Kugelabschnitt 5 gebildeten Lagerkern ist ein bezüglich seines Innenumfanges entsprechend gekrümmt gestalteter Lagerring 6 zugeordnet, welcher mittels Pressitz drehsicher und axial unverschieblich in eine Augenbohrung 7 der Türhaltestange 1 eingesetzt ist. Im gezeigten Ausführungsbeispiel ist der Lagerring 6 zusätzlich mittels radial gerichteter Randverformungen 8 deren Augenbohrung 7 an der Türhaltestange an dieser gesichert bzw. festgelegt.

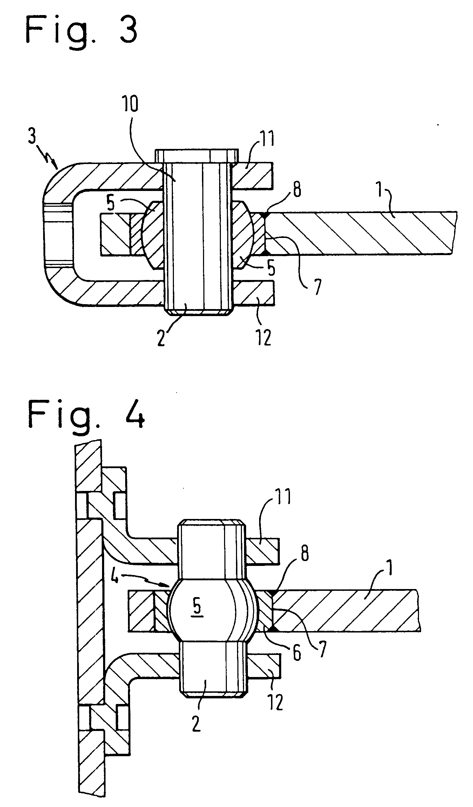

Bei dem in der Figur 3 gezeigten Ausführungsbeispiel ist der durch einen Kugelabschnitt 5 gebildete, als eigenständiges Bauteil gestaltete Lagerkern axial verschieblich auf einem zylindrischen in einen zweiarmigen Lagerbock 3 eingesetzten und vermittels einer Umfangsrändel 10 drehsicher am einen Arm 11 des Lagerbockes 3 festgelegten Lagerstift 2 angeordnet, wobei die beiden Arme 11 und 12 des Lagerbockes 3 gleichzeitig eine Begrenzung der axialen Verschieblichkeit des Kugelabschnittes 5 bilden.

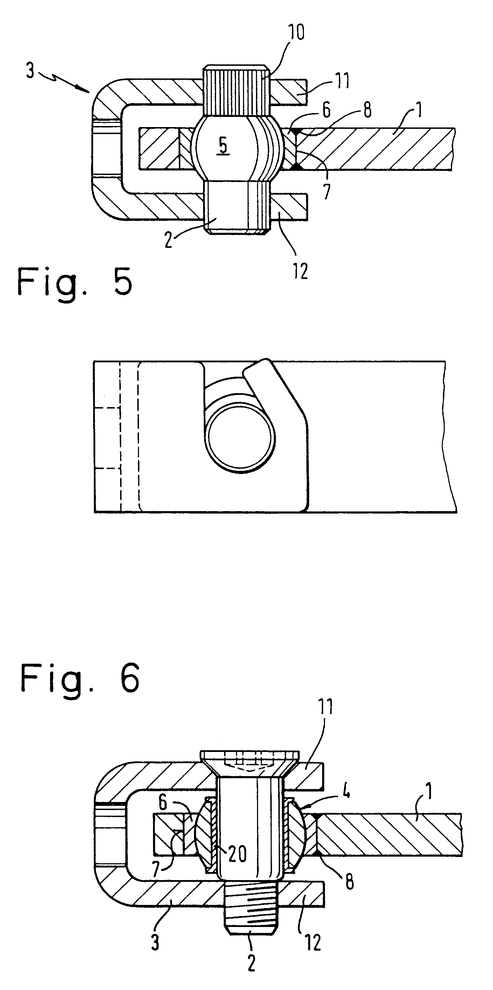

Bei dem in den Figuren 4 und 5 dargestellten Ausführungsbeispielen ist der den Lagerkern des sphärischen Lagers 4 bildende Kugelabschnitt 5 mit dem Lagerstift 2 einteilig ausgebildet und der Lagerstift 2 zur Erzielung einer axialen Einstellbarkeit des sphärischen Lagers 4 axial verschieblich in den Armen 11 und 12 eines zweiarmigen Lagerbockes 3 aufgenommen, wobei bei dem in der Figur 5 gezeigten Ausführungsbeispiel zusätzlich vorgesehen ist, daß der Lagerstift 2 vermittels einer axial ausgerichteten Umfangsrändel 10 drehsicher im Lagerarm 11 des Lagerbockes 3 abgestützt ist.

Bei dem in der Figur 6 dargestellten Ausführungsbeispiel ist ein durch einen stufenförmig abgesetzten Schraubenbolzen gebildeter Lagerstift 2 in einen zweiarmigen Lagerbock 3 eingesetzt und ist der als eigenständiges Bauteil gestaltete, den Lagerkern des sphärischen Lagers 4 bildende Kugelabschnitt 5 vermittels einer Lagerbuchse 20 aus wartungsfreiem Lagermaterial axial verschieblich auf dem Lagerstift 3 gelagert.

Aus den Darstellungen der Figuren 3 bis 6 ist weiterhin erkennbar, daß der den Lagerkern bildende Kugelabschnitt 5 jeweils eine größere, etwa dem Doppelten der Materialdicke der Türhaltestange 1 entsprechende axiale Höhe aufweist, wodurch bei einer doppelarmigen Ausgestaltung des Lagerbockes 3 sicher gestellt ist, daß die Türhaltestange 1 während des Betriebes des Türfeststellers auch bei in seine äußerste obere oder untere Schiebelage verstelltem Lagerkern 5 nicht an Lagerarmen 11 oder 12 sdes Lagerbockes 3 zur Anlage kommen kann.

## Patentansprüche

1. Kraftwagentürfeststeller mit einer Haltestangenlagerung, die aus einer am einen Türanordnungsteil, Tür oder Türsäule angelenkten Türhaltestange und einem am anderen Türanordnungsteil befestigten Haltergehäuse bestehen und bei denen die mit einer Scharnieraugenbohrung versehene Türhaltestange auf einem vermittels eines Lagerbockes feststehend an einem der beiden Türanordnungsteile, Tür oder Türsäule, befestigten Lagerstift schwenkbar gelagert ist, dadurch gekennzeichnet, daß die Türhaltestange (1) vermittels eines sphärisch ausgebildeten Lagers (4) räumlich schwenkbar am Lagerstift (2) gelagert ist.

2. Kraftwagentürfeststeller nach Anspruch 1, dadurch gekennzeichnet, daß der Lagerkern des sphärischen Lagers (4) durch einen mit dem Lagerstift (2) starr verbundenen Kugelabschnitt (5) gebildet ist.

3. Kraftwagentürfeststeller nach Anspruch 1, dadurch gekennzeichnet, daß der Lagerkern des sphärischen Lagers (4) durch einen mit dem Lagerstift (2) einteilig ausgebildeten Kugelabschnitt (5) gebildet ist.

4. Kraftwagentürfeststeller nach Anspruch 1 und 3, dadurch gekennzeichnet, daß der Lagerkern des sphärischen Lagers (4) durch einen mit diesem einteilig ausgebildeten, am freien Ende eines fliegend gelagerten Lagerstiftes (2) angeordneten Kugelabschnitt (5) gebildet ist.

5. Kraftwagentürfeststeller nach Anspruch 1 und 3, dadurch gekennzeichnet, daß der Lagerkern des sphärischen Lagers (4) durch einen mit diesem einteilig ausgebildeten, symetrisch zu dessen beiden freien Enden mittig an einem in einem zweiarmigen Lagerbock (3) aufgenommenen Lagerstift (2) angeordneten Kugelabschnitt (5) gebildet ist.

6. Kraftwagentürfeststeller nach einem der voraufgehenden Ansprüche 1 bis 5, dadurch gekennzeichnet, daß der den den Lagerkern des sphärischen Lagers (4) bildende Kugelabschnitt (5) aufweisende Lagerstift (2) axial verschieblich in seinem Lagerbock (2) angeordnet ist.

7. Kraftwagentürfeststeller nach Anspruch 1, dadurch gekennzeichnet, daß der Lagerkern des sphärischen Lagers (4) als eigenständiges Bauteil vermittels einer Lagerbuchse (20) aus wartungsfreiem Material axial verschieblich auf dem Lagersift (2) gelagert ist.

8. Kraftwagentürfeststeller nach Anspruch 1 und 7, dadurch gekennzeichnet, daß das sphärische Lager (4) als eigenständige Baueinheit und insgesamt scheibenförmig ausgebildet ist.

9. Kraftwagentürfeststeller nach einem der voraufgehenden Ansprüche 1 bis 8, dadurch gekennzeichnet, daß der Lagerring (6) des sphärischen Lagers (4) vermittels Pressitz in der Augenbohrung (7) der Türhaltestange (1) befestigt ist.

10. Kraftwagentürfeststeller nach einem der voraufgehenden Ansprüche 1 bis 9, dadurch gekennzeichnet, daß der Lagerring (7) des sphärischen Lagers (4) zusätzlich zum Pressitz vermittels radial gerichteter örtlicher Randverprägungen (8) der Augenbohrung (7) der Türhaltestange (1) in dieser festgelegt ist.

11. Kraftwagentürfeststeller nach einem der Ansprüche 1 bis 10, dadurch gekennzeichnet, daß die Türhaltestange (1) aus einem oder mehreren Flachmaterialzuschnitten gebildet ist und die Höhe des als eigenständiges Bauteil gestalteten sphärischen Lagers (4) wenigstens annähernd der Materialdicke der Türhaltestange (1) entspricht.

12. Kraftwagentürfeststeller nach einem der Ansprüche 1 bis 11, dadurch gekennzeichnet, daß der Lagerbock (3) als zweiarmiger Lagerbock, dessen beide Arme (11 und 12) das Lagerende der Türhaltestange (1) gabelartig umgreifen, ausgebildet und der Lagerstift (2) an wenigstens der Arme (11 oder 12) des Lagerbockes (3) drehsicher festgelegt ist.

13. Kraftwagentürfeststeller nach einem der Ansprüche 1 bis 12, dadurch gekennzeichnet, daß der Lagerstift (2) fliegend und drehsicher an einem einarmigen Lagerbock (3) gelagert und an seinem freien Ende mit einem angeformten oder angefügten Kopfteil versehen ist.

14. Kraftwagentürfeststeller nach einem der Ansprüche 1 bis 13, dadurch gekennzeichnet, daß die beiden Teile (5 und 7) des sphärischen Lagers (4) aus einer wartungsfrei zusammenarbeitenden Materialpaarung bestehen.

15. Kraftwagentürfeststeller nach einem der Ansprüche 1 bis 14, dadurch gekennzeichnet, daß der durch einen Kugelabschnitt (5) gebildete Lagerkern des sphärischen Lagers (4) eine größere axiale Höhe aufweist als der Lagerring (7) des sphärischen Lagers (4) bzw. die Materialdicke der Türhaltestange (1).

## Claims

1. Vehicle door fastener with a stay bar mounting, comprising a door stay bar pivoted on a door mounting, door or door pillar and a holder casing fastened to the other door mounting, and wherein the door stay bar provided with a hinge eyelet is disposed to pivot on a bearing pin fixedly fastened to one of the two door mountings, the door or door pillar by means of a bearing block, characterised in that the door stay bar (1) is disposed to pivot spatially on the bearing pin (2) by means of a spherical bearing (4).

2. Vehicle door fastener according to Claim 1, characterised in that the bearing core of the spherical bearing (4) is formed by a ball section (5) rigidly connected to the bearing pin (2).

3. Vehicle door fastener according to Claim 1, characterised in that the bearing core of the spherical bearing (4) is formed by a ball section (5) integral to the bearing pin (2).

4. Vehicle door fastener according to Claims 1 and 3, characterised in that the bearing core of the spherical bearing (4) is formed by a ball section (5) integral thereto and disposed at the free end of an overhung bearing pin (2).

5. Vehicle door fastener according to Claims 1 and 3, characterised in that the bearing core of the spherical bearing (4) is formed by a ball section (5) integral thereto and disposed symmetrically to both its free ends centrally on a bearing pin (2) accommodated in a two-armed bearing block (3).

6. Vehicle door fastener according to one of the preceding Claims 1 to 5, characterised in that the bearing pin (2) with the ball section (5) forming the bearing core of the spherical bearing (4) is arranged to slide axially in its bearing block (3).

7. Vehicle door fastener according to Claim 1, characterised in that the bearing core of the spherical bearing (4) is mounted as an independent structural part to slide axially on the bearing pin (2) by means of a bearing bush (20) made of maintenance-free material.

8. Vehicle door fastener according to Claims 1 and 7, characterised in that the spherical bearing (4) is constructed as an independent structural part and is disc-shaped overall.

9. Vehicle door fastener according to one of the preceding Claims 1 to 8, characterised in that the bearing ring (6) of the spherical bearing (4) is fastened in the eyelet (7) of the door stay bar (1) by press fit.

10. Vehicle door fastener according to one of the preceding Claims 1 to 9, characterised in that, in addition to the press fit, the bearing ring (6) of the spherical bearing (4) is fixed in the door stay bar (1) by means of radially directed, localised stamped edges (8) of the eyelet (7) of the door stay bar (1).

11. Vehicle door fastener according to one of the preceding Claims 1 to 10, characterised in that the door stay bar (1) is formed from one or several flat material blanks, and the height of the spherical bearing (4) constructed as an independent structural part corresponds at least approximately to the material thickness of the door stay bar (1).

12. Vehicle door fastener according to one of the preceding Claims 1 to 11, characterised in that the bearing block (3) is constructed as a two-armed bearing block, the two arms (11 and 12) of which engage around the bearing end of the door stay bar (1) in a fork-like arrangement, and the bearing pin (2) is fixed against rotation on at least the arms (11 or 12) of the bearing block (3).

13. Vehicle door fastener according to one of the preceding Claims 1 to 12, characterised in that the bearing pin (2) is mounted overhung and against rotation on a one-armed bearing block (3), and is provided on its free end with a head portion formed or joined onto it.

14. Vehicle door fastener according to one of the preceding Claims 1 to 13, characterised in that the two parts (5 and 7) of the spherical bearing (4) are made of a maintenance-free combination of two materials.

15. Vehicle door fastener according to one of the preceding Claims 1 to 14, characterised in that the axial height of the bearing core of the spherical bearing (4) formed by a ball section (5) is greater than the bearing ring (6) of the spherical bearing (4) or the material thickness of the door stay bar (1).

## Revendications

1. Arrêtoir de porte avec une articulation pour la barre d'arrêt, pour portes de véhicules automobiles, qui se compose d'une barre d'arrêt articulée sur l'une des parties de la porte, à savoir la porte elle-même ou le montant de porte, et, d'un boîtier de support fixé sur l'autre partie de la porte, la barre d'arrêt pourvue d'un alésage étant articulée sur une broche qui est fixée par l'intermédiaire d'un support sur l'une des parties de la porte, à savoir la porte elle-même ou le montant de porte, *caractérise en ce que* la barre d'arrêt (1) est articulée sur la broche (2) par l'intermédiaire d'un palier (4) de forme sphérique.

2. Arrêtoir de porte selon la revendication 1 *caractérisé en ce que* le noyau du palier sphérique (4) est constitué d'un segment sphérique assemblé de manière fixe avec la broche (2).

3. Arrêtoir de porte selon la revendication 1 *caractérisé en ce que* le noyau du palier sphérique (4) est constitué d'un segment sphérique formant une pièce unique avec la broche (2).

4. Arrêtoir de porte selon les revendications 1 et 3 *caractérisé en ce que* le noyau du palier sphérique (4) est constitué d'un segment sphérique formant une pièce unique avec l'extrémité de la broche (2) disposée en porte à faux.

5. Arrêtoir de porte selon les revendications 1 et 3 *caractérisé en ce que* le noyau du palier sphérique (4) est constitué d'un segment sphérique formant une pièce unique avec la broche (2), disposé au milieu de ladite broche symétriquement par rapport aux extrémités de celle-ci, ladite broche étant portée par un support à deux branches (3).

6. Arrêtoir de porte selon l'une des revendications 1 à 5 *caractérisé en ce que* la broche (2) qui est pourvu d'un segment sphérique (5) formant le noyau du palier sphérique (4) est disposée dans un support (3) en étant mobile axialement.

7. Arrêtoir de porte selon la revendication 1 *caractérisé en ce que* le noyau du palier sphérique (4) est constituée d'une pièce séparée disposée sur la broche en étant mobile axialement par l'intermédiaire d'une douille (20) en matériau ne nécessitant pas d'entretien.

8. Arrêtoir de porte selon les revendications 1 et 7 *caractérisé en ce que* le palier sphérique (4) est une pièce indépendante en forme de disque.

9. Arrêtoir de porte selon l'une des revendications 1 à 8 *caractérisé en ce que* l'anneau de support (6) du palier sphérique (4) est monté dans l'alésage (7) dans la barre d'arrêt (1) avec ajustement serré.

10. Arrêtoir de porte selon l'une des revendications 1 à 9 c*aractérisé en ce que* l'anneau de support (6) du palier sphérique (4) est fixé dans l'alésage (7) de la barre d'arrêt (1) non seulement avec ajustement serré mais encore par des déformations (8) du bord de l'alésage (7), orientés radialement.

11. Arrêtoir de porte selon l'une des revendications 1 à 10 *caractérisé en ce que* la barre d'arrêt (1) est constituée d'un ou plusieurs segments de plat et *en ce que* la hauteur du palier sphérique (4) constitué d'une pièce séparée correspond approximativement à l'épaisseur de la barre d'arrêt (1).

12. Arrêtoir de porte selon l'une des revendications 1 à 11 *caractérisé en ce que* le support (3) est à deux branches (11), (12) qui entourent, à l'instar des dents d'une fourche, l'extrémité d'articulation de la barre d'arrêt (1) et *en ce que* la broche (2) est assemblée avec les branches (11), (12) du support (3) sans possibilité de rotation.

13. Arrêtoir de porte selon l'une des revendications 1 à 12 *caractérisé en ce que* la broche (2) est disposée en porte à faux et sans possibilité de rotation sur un support (3) à une branche et comporte à son extrémité libre une tête formée sur ladite branche ou qui lui est ajoutée.

14. Arrêtoir de porte selon l'une des revendications 1 à 13 *caractérisé en ce que* les deux parties (5), (6) du palier sphérique (4) sont en matériau ne nécessitant pas d'entretien.

15. Arrêtoir de porte selon l'une des revendications 1 à 14 *caractérisé en ce que* le noyau du palier sphérique (4) constitué d'un segment sphérique possède une hauteur axiale plus grande que l'anneau de support (6) dudit palier sphérique (4), respectivement que l'épaisseur de la barre d'arrêt (1).
